# EUROPEAN PATENT APPLICATION

(11) **EP 4 817 397 A1**
(43) Date of publication of application: **07.10.2026**
(21) Application number: 25315114.6
(22) Date of filing: 01.04.2025
(51) Int. Cl.: A01D 46/28, B07B 4/08

(54) **MOBILE FRUIT HARVESTING MACHINE**

(71) Applicant: CNH Industrial France S.A.S., 91150 Morigny-Champigny (FR); CNH Industrial Belgium N.V., 8210 Zedelgem (BE)
(72) Inventor: Darrieutort, Anthony, 91150 Morigny-Champigny (FR); Chovet, Rogelio, 8210 Zedelgem (BE)
(74) Representative: CNH Industrial IP Department

(57) **Abstract**

A mobile fruit harvesting machine (100), comprising: a conveyor (302, 402, 502) configured to receive harvested material and convey the harvested material (310) in a conveying direction (C) through a separation region (304, 404), the harvested material comprising a mixture of fruit (312) and debris (318, 319); and an airflow system (350, 450) configured to direct a separation airflow (308, 508) through the harvested material (310) in the separation region, the separation airflow causing the fruit and debris to follow differing flow paths (312A, 318A, 319A) through the separation region, wherein the airflow system comprises: an outlet unit (356, 456, 556) comprising a plurality of outlet vents (3560, 4560, 5560) located underneath the separation region, the outlet vents being configured to direct the separation airflow upwards through the separation region; and an intake unit (354, 454) for supplying a supply airflow (409, 509) to the outlet unit, the intake unit being spaced away from both the fruit and debris flow paths.

## Description

### FIELD

The present disclosure relates to mobile fruit harvesting machines.

### BACKGROUND

In modern industrial agriculture, machinery is increasingly used to perform tasks which were previously done by hand. For example, specialist harvesting machines are now used for harvesting fruit such as grapes, olives, almonds, or oranges. Mobile fruit harvesting machines are driven (either as self-propelled machines, or trailed behind a tractor) through an agricultural field, whereupon they collect and process fruit from the fruit trees or vines. Such machines typically comprise harvesting systems which remove the fruit from the tree or vine, and a conveying system for conveying the harvested fruit from the harvesting system to either an outlet or an internal storage tank or hopper. Depending on the fruit being harvested, further processing steps may be needed such as separating ripe and unripe fruit.

In some examples, the harvested fruit is then packaged for sale. However, in other examples, it is the juice or liquid content of the harvested fruit which is interest. For example, grapes may be harvested for their grape juice to make wine, while olives may be harvested for their oil. Oranges may also be harvested, both for the oranges themselves and for their juice.

There is a need for fruit harvesting machines capable of providing improved agricultural yields and which can perform more efficiently, compared to existing machines.

### SUMMARY OF THE INVENTION

According to a first example, there comprises a mobile fruit harvesting machine, comprising: a conveyor configured to receive harvested material and convey the harvested material in a conveying direction through a separation region, the harvested material comprising a mixture of fruit and debris; and an airflow system configured to direct a separation airflow through the harvested material in the separation region, the separation airflow causing the fruit and debris to follow differing flow paths through the separation region, wherein the airflow system comprises: an outlet unit comprising a plurality of outlet vents located underneath the separation region, the outlet vents being configured to direct the separation airflow upwards through the separation region; and an intake unit for supplying a supply airflow to the outlet unit, the intake unit being spaced away from both the fruit and debris flow paths.

The separation airflow causes the fruit and debris to be separated along different trajectories. The fruit may be collected in a collection receptacle for further processing, while the debris may be ejected from the mobile fruit harvesting machine or otherwise disposed of.

Examples disclosed herein can allow fruit to be separated from debris efficiently, while minimising wear on the components of the fruit harvesting machine. Examples of the present disclosure can perform better than systems that place key components of the airflow system, such as fan units, in the path of the debris and/or fruit. This is because doing so would lead to increased wear and would compromise aerodynamic efficiency.

Separating the intake unit from the fruit and debris flow paths can prevent fruit and debris from coming into contact with the intake unit, can increase the lifespan of the airflow system, can reduce maintenance requirements, and / or can allow the airflow system to be optimised for aerodynamic performance rather than physical robustness.

The airflow is directed upwards in the sense that the airflow has a direction comprising a substantial vertical component. The separation airflow may be directed vertically upwards or angled upwards such that it has both lateral/longitudinal and vertical components. By directing the separation airflow upwards through the separation region, debris will be initially deflected upwards, and then fall back down under its own weight. This can keep the separated debris contained within a small volume of space, and can assist with the debris not reaching the intake unit.

Optionally, the airflow system further comprises a supply system for supplying the supply airflow to the outlet unit such that the supply airflow has a substantially equal pressure across the outlet vents.

Optionally, the supply system comprises one or more supply ducts for communicating the supply airflow from the intake unit to the outlet unit.

Optionally, the intake unit is fluidly connected to the outlet unit via a first and second supply duct, the supply ducts being configured to supply the supply airflow from the intake unit to the outlet. Wherein the first and second ducts may have equal lengths.

Optionally, the first supply duct is fluidly connected proximal to a first end of the outlet unit, and the second supply duct is fluidly connected proximal to a second end of the outlet unit.

Optionally, the plurality of outlet vents are disposed between the first and second supply ducts.

Optionally, the outlet vents comprise at least two parallel rows of circular vents. Optionally, the intake opening is located above the material flow path.

Optionally, the mobile fruit harvester further comprises an impingement surface configured to collect material suspended within the separation airflow.

Optionally, the impingement surface is located downstream from the outlet vents along the separation airflow.

Optionally, the separation airflow meets a collection region of the impingement surface at an impinging angle, the impinging angle being the impinging angle being less than 90°, preferably less than 80°, and more preferably less than 70°.

Optionally, the intake unit comprises a fan configured to direct air into the airflow system and towards the outlet unit, and preferably the fan is a centrifugal fan, and further preferably the fan is a centrifugal scroll fan.

Optionally, the conveyor is configured to launch a component of the harvested material in a substantially ballistic trajectory passing through the separation region.

Optionally, the outlet vents are distributed across a width of the conveyor perpendicular to the conveying direction.

Optionally, the conveyor comprises an entry conveyor, the entry conveyor being configured to direct harvested material into a fall step across the separation region.

Optionally, the conveyor further comprises an exit conveyor configured to direct a component of the harvested material away from the separation region

Optionally, the outlet unit further comprises a plurality of back vents for directing a pre-separation airflow through the harvested material.

### BRIEF DESCRIPTION OF THE DRAWINGS

Figure 1 shows an exemplary mobile fruit harvesting machine.
Figure 2 shows a fruit separation system. Figure 2A shows a first side view of the conveyor part of the system, Figure 2B shows a side view of the debris extractor part of the system, and Figure 2C shows a three-quarters view of a separation fan for use in the system.
Figure 3 shows a side view of an exemplary fruit separation system according to an embodiment of the present disclosure.
Figure 4 shows an exemplary airflow system according to an embodiment of the present disclosure. Figure 4A and 4B show front and back three-quarters views of the airflow system, and Figure 4C shows the impeller of the fan of the airflow system in isolation.
Figure 5 shows a Computational Fluid Dynamics (CFD) - generated airflow plot illustrating the airflow patterns within an exemplary fruit separation system according to an embodiment of the present disclosure. Figure 5A shows a front cross-sectional view through the plane B-B, while Figure 5B shows a side cross-sectional view through the plane A-A.
Figure 6A-C show exemplary outlet units comprising pluralities of outlet vents, viewed along the axis of the separation airflow.
Figure 7A-C show the variants of the exemplary outlet unit shown in Figure 6C, including pluralities of back vents.

### DETAILED DESCRIPTION

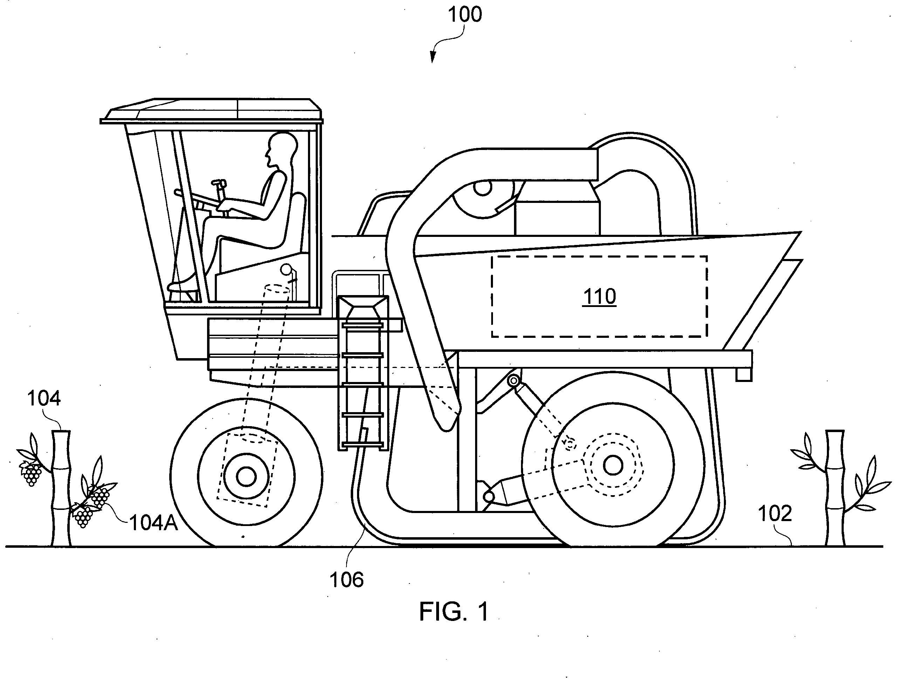

Turning to Figure 1, a fruit harvesting machine 100 is shown in an agricultural field 102. The fruit harvesting machine 100 is configured for harvesting grapes 104A from vines 104. As the machine 100 drives forward, the vines 104 passes through a harvesting system 106 mounted to the underside of the fruit harvesting machine 100. The harvesting systems 106 of conventional grape harvester machines 100 often employ mechanical shaking or vibrating systems to detach the grape clusters from the vines 104. However, these systems may also detach and collect other debris, such as the leaves or branches of the vines 104. The harvested material from the vines thus comprises a mixture of grapes 104A and other debris.

A high proportion of unseparated debris present in the harvested load of grapes complicates the post-harvest processing stages, and additional steps may be required such as manually cleaning and sorting of the grapes. This increases processing time and labour costs. It is therefore desirable to separate at least some of the debris from the grapes, as it is a potential source of contamination and can adversely affect the quality of the grape yield. This is particularly problematic for wine producers, where purity of the grape is crucial.

To separate the fruit from at least some of the debris, the harvesting system 106 transfers the harvested material to a fruit separation system 110 onboard the fruit harvesting machine 100.

In the example shown, the mobile fruit harvesting machine 100 comprises a self-propelled machine on which the fruit separation system 110 and the fruit harvesting system 106 are permanently or removably mounted. However in other examples, the mobile fruit harvesting machine 100 may be comprised in a trailed "pull-behind" system, which is towed by a tractor. Furthermore, while the fruit harvesting machine 100 has been described as a grape harvesting machine for harvesting grapes, it will be appreciated that the present disclosure is also applicable when harvesting other kinds of fruits such as apples, oranges and citrus fruit, coffee fruit, olives, etc.

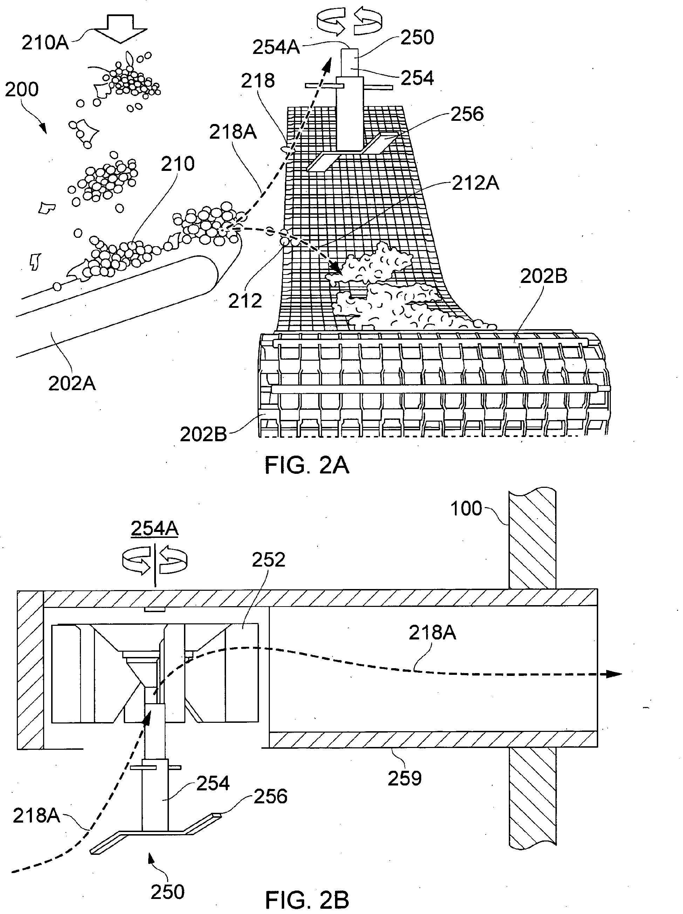

Turning to Figures 2A-C, a fruit separation system 200 is shown. The fruit separation system 200 receives an inflow 210A of harvested material 210, the harvested material 210 comprising a mixture of fruit 212 and debris 218. The inflow 210A of harvested material 210 is deposited onto an entry conveyor belt 202A. A separator fan system 250 comprising a fan 254 is used to separate the fruit 212 from the debris 218 by generating an airflow. The fan 254 comprises a plurality of blades 252 and is configured to spin the blades 252 around an axis 254A to generate the airflow.

The airflow is sufficiently powerful to deflect the trajectory of debris 218 in the harvested material 210 such that it rises upwards along a debris flow path 218A. Smaller debris, such as dirt and dust particles, may also be borne along the debris flow path 218A. The debris flow path 218A passes through chopping blades 256 of the fan 254, which chop the debris 218 into smaller chunks. The fruit 212 is less deflected, and falls along fruit flow path 212A onto an exit conveyor belt 202B.

As shown primarily by Figure 2B, the debris 218 follows the debris flow path 218A up around the fan 254 and blades 252. The upper end of the fan 254 forms a junction with a debris conduit 259. The debris 218 follows the debris flow path 218A out of the fruit harvesting machine 100. The debris conduit 259 is shown in cross-section, to allow the interior of the debris conduit 259 to be seen. As each piece of debris 218 rises along the debris flow path 218A it may collide with the blades 252, chopping blades 256, and/or body of the fan 254. Indeed, collisions will occur frequently between debris 218 and the fan 254 and blades 252 due to the amount of debris 218 and the high rotational speed of the blades 252. The blades 252 of the fan 254 should be sufficiently robust, so that they are able to withstand the collisions they will experience in use.

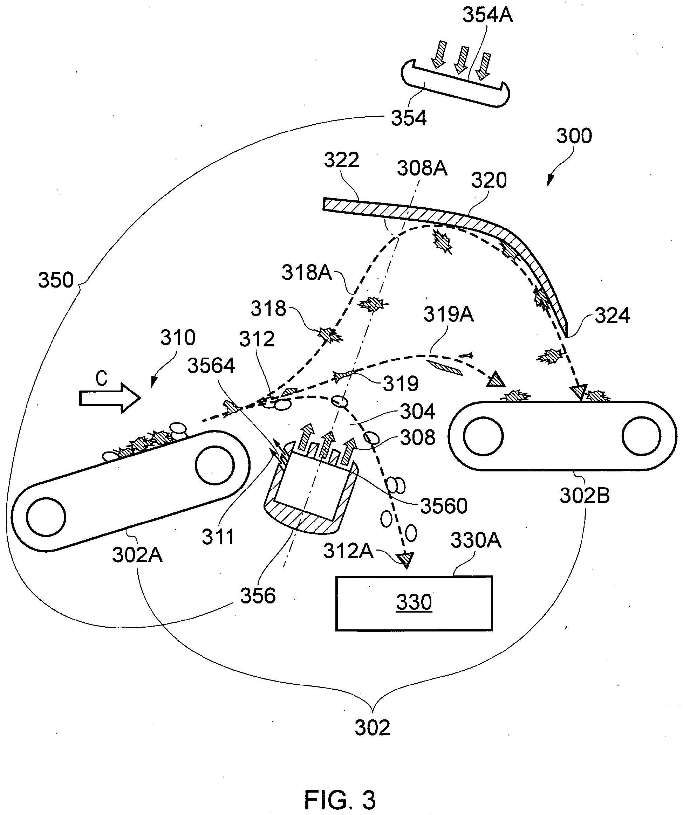

An exemplary fruit separation system 300 according to an embodiment of the present disclosure will now be described in relation to Figure 3. In some examples, the fruit separation system 300 may constitute the fruit separation system 110 of Figure 1. The fruit separation system 300 receives an inflow of harvested material 310, the harvested material 310 comprising a mixture of fruit 312 and debris 318, 319 such as leaves and twigs.

An entry conveyor belt 302A is configured to receive the harvested material 310 and convey the harvested material 310 in a conveying direction C through a separation region 304, in which the fruit 312 will be separated from the debris 318. Once the harvested material 310 reaches the separation region 304, it is launched in a ballistic trajectory, in the sense that the harvested material is launched into free-fall with a velocity component in the conveying direction C, and an initial velocity component either upwards or downwards (but increasingly downwards over time due to gravity). The entry conveyor 302A feeds harvested material 310 into a fall step across the separation region 304. In the fall step, the harvested material 310 is launched or dropped by the entry conveyor 302A into a ballistic or freefall trajectory.

An airflow system 350 directs a separation airflow 308 through the harvested material 310 within the separation region 304. The airflow system 350 comprises an outlet unit 356 in the form of a duct running perpendicular to the plane of the image (and shown in cross-section). The outlet unit 356 comprises a plurality of outlet vents 3560 located underneath the separation region 304. The outlet vents 3560 are configured to direct the separation airflow 308 upwards and substantially non-parallel to the conveying direction C through the separation region 304. In the example shown the direction of the separation airflow 308, as indicated by the airflow centreline axis 308A, is offset towards the vertical, but not beyond the vertical. That is, the separation airflow 308 does not have a velocity component in the opposite direction to the conveying direction C.

The trajectory taken by each object of harvested material through the separation airflow 308 is a function of its weight, shape, and drag coefficient. Objects with a large surface area and drag coefficient relative to their mass, like leaves 318, experience a large deflection force from an airflow relative to their mass, and thus will experience a high drag force. Objects with a smaller surface area and drag coefficient relative to their mass, like fruit 312, will experience a lower drag force.

By positioning the fall step across the separation region 304, the separation airflow 308 interacts with the harvested material 310 while the harvested material 310 is in freefall, allowing the separation airflow 308 to provide a greater deflection effect and thus separate fruit 312 from debris 318, 319 more effectively. Furthermore, since the harvested material 310 is in freefall rather than being supported by a conveyor or other structure, the separation airflow 308 can directly interact with the harvested material 310 without being deflected or having to pass through an intervening structure.

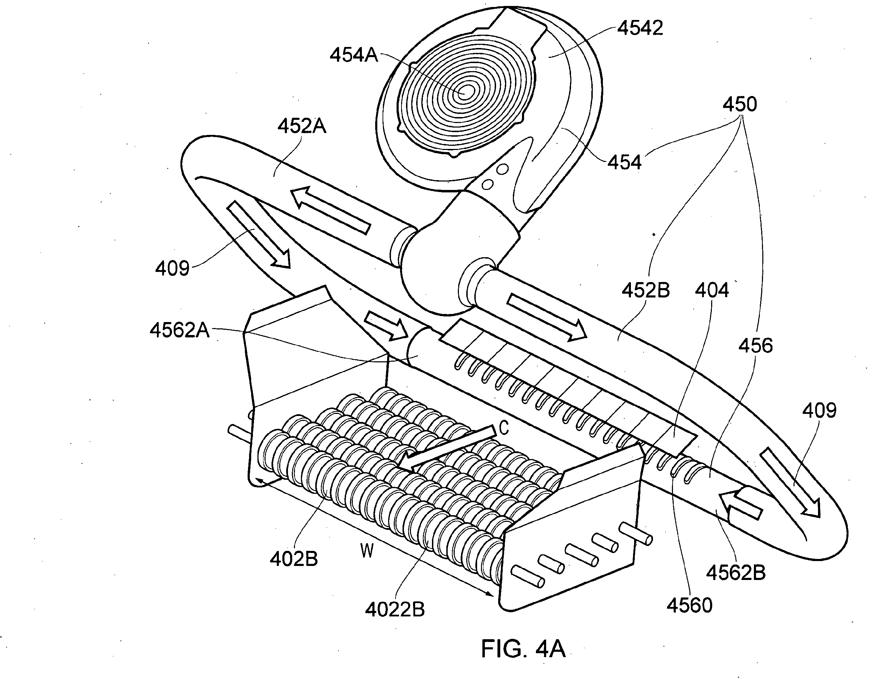

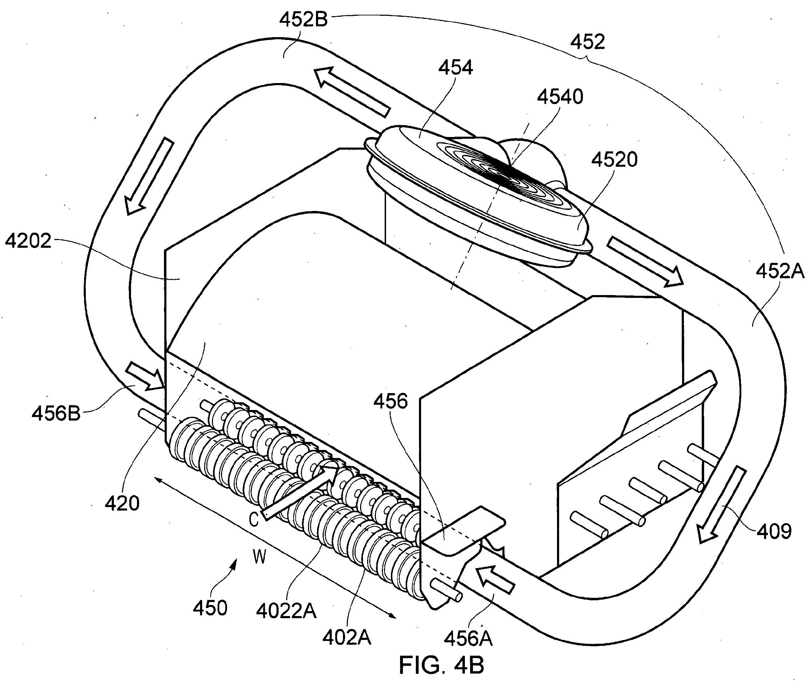

The airflow system 350 also comprises an intake unit 354 for supplying a supply airflow (not shown) to the outlet unit 356. As will be discussed below with reference to Figures 4A and 4B, the airflow system 350 can include ducting (not shown in Figure 3) for communicating air from the intake unit 354 to the outlet unit 356. The separation airflow 308 that flows out of the outlet unit 356 is configured to deflect the trajectory of high-drag-coefficient debris such as leaves 318 in the harvested material 310 such that it rises upwards along a first debris flow path 318A.

An impingement surface 320 is positioned above the separation region 304. The impingement surface 320 is located downstream from the outlet vents 3560, such that the separation airflow 308 flows from the outlet vents 3560 to meet the impingement surface 320. The separation airflow 308 impinges on the impingement surface 320 at a collection region 322. The collection region 322 of the impingement surface 320 is configured to collect debris 318 suspended within the separation airflow 308, and direct the debris 318 towards one or more debris delivery regions 324 on the impingement surface 320. The delivery region(s) 324 direct the debris 318 off of the impingement surface 320. A component of the separation airflow 308 may flow across the impingement surface 320 from the collection region 322 to the debris delivery region 324, thereby helping to push debris 318 across the impingement surface 320 from the collection region 322 to the delivery region 324. The impingement surface 320 is angled and curved to encourage debris 318 to slide along the collection region 322 towards the debris delivery regions 324.

Debris with an intermediate drag coefficient, such as twigs 319, are also deflected by the separation airflow 308. This debris 319 may be borne along a secondary debris flow path 319A which has a lower apex than the first debris flow path 318A, such that it lands on the exit conveyor 302B.

The fruit flow path 312A, that is the trajectory of the lower-drag-coefficient fruit 312, is less deflected than the first debris flow path 318A of either the high-drag coefficient debris 318, or the second debris flow path 319A of the intermediate-drag-coefficient debris 319. That is, the separation airflow 308 causes the fruit 312 and debris 318, 319 to follow differing flow paths. This causes the fruit 312 to drop into a fruit collection receptacle 330 through an opening 330A in the receptacle 330.

The exit conveyor 302B is configured to direct a component of the harvested material 310 (in this case, the debris 318, 319 that has passed through the separation region 304) away from the separation region 304. In other examples, the exit conveyor 302B may be configured to collect the fruit 312 instead, while the debris 318, 319 is collected by a receptacle or another exit conveyor.

The intake unit 354 has an intake opening 354A spaced away from both the fruit flow path 312A and the debris flow paths 318A, 319A, such that fruit 312 and debris 318, 319 is prevented from entering the intake opening 354A where it could cause blockages, damage or corrosion. The intake opening 354A may be spaced away from the fruit flow path 312A and the debris flow paths 318A, 319A in several ways, as shown. Firstly, the intake opening 354A faces away from the flow paths 312A, 318A, 319A, such that the main body of the intake unit 353 physically shields the intake opening 354A from fruit 312 and debris 318, 319.

Secondly, the intake unit 354 is positioned above the separation region 304. Specifically, the intake unit 354 is positioned sufficiently high above the separation region 304 that debris 318, 319 lifted by the separation airflow 308 is brought back down under its own weight before reaching the intake opening 354A.

Since the airflow system 350 is less exposed to debris 318, 319, dust, dirt, and other abrasive particles, mechanical wear on the airflow system 350 is reduced, thereby minimising maintenance requirements and increasing the service life of components. Reducing interference between debris 318, 319 and the airflow system 350 may also reduce noise, which as discussed below is particularly advantageous for fruit harvesting machines.

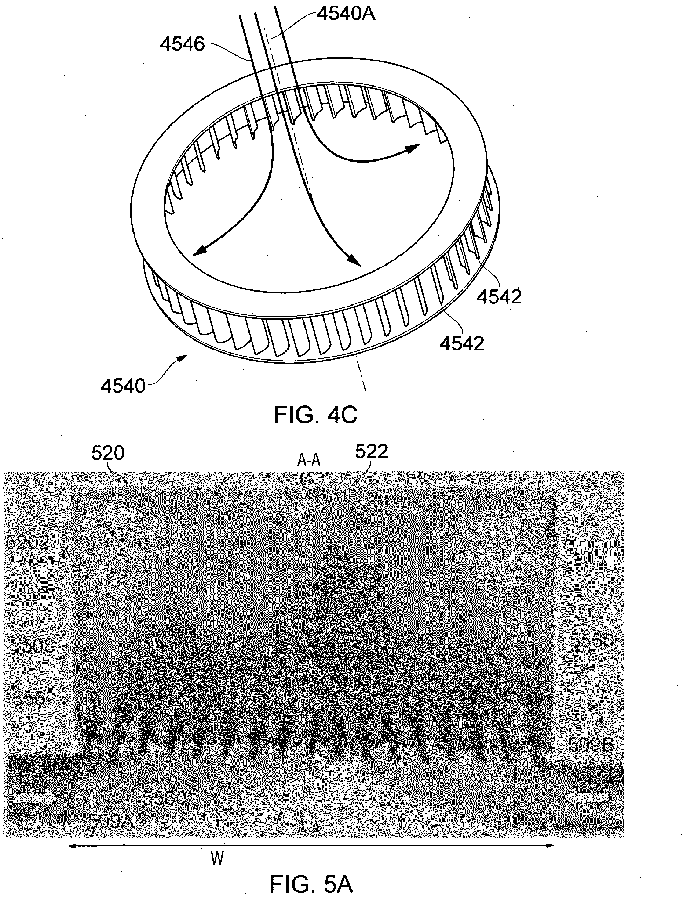

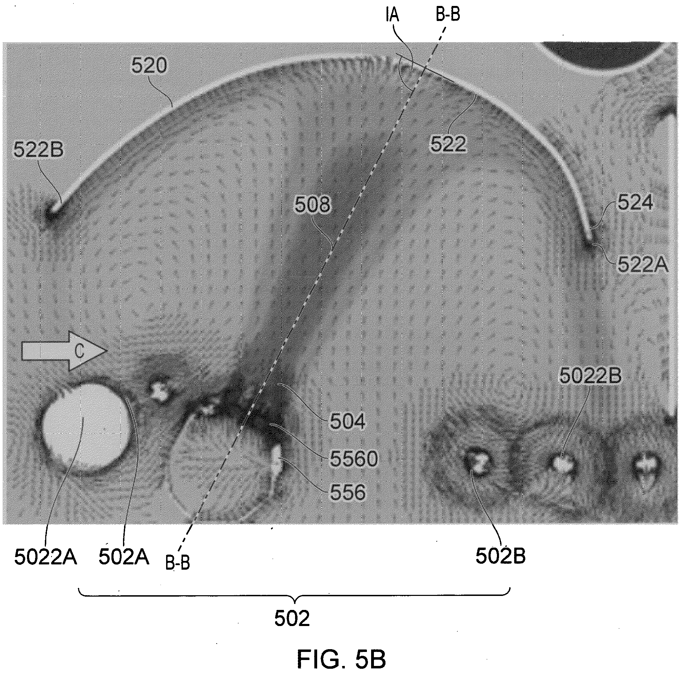

As will be discussed in further detail in relation to Figure 5, the separation airflow 308 may be configured such that the airflow axis 308A meets the collection region 322 at impingement angle IA, wherein the impinging angle IA less than 90 degrees. In other examples, the impinging angle is less than or equal to 80°, or even less than or equal to 70°. Angling the impinging angle IA less than 90 degrees directs the separation airflow 308 and debris 318 across the collection region 322 and off the sides of the impingement surface 320, and away from the collection region 322 where debris 318 is initially collected. That is, when the separation airflow 308 meets the collection region 322 the airflow 308 comprises a velocity component across the collection region 322, as well as a velocity component into the collection region 322. The velocity component across the collection region 322 is what directs the debris 318 across the collection region 322. Preferably, the impinging angle IA is less than 90 degrees, such that the separation airflow 308 has a component in the conveying direction C. This ensures that the entry conveyor 302A and the airflow 308 work together to impart momentum onto the harvested material 310 in the conveying direction C, which allows the debris 318 to travel further along the collection region 322.

In the example shown, the fruit separation system 300 is configured such that the separation airflow 308 has a vertical component, such that the high-drag-coefficient debris 318 is lifted upwards all the way to the impingement surface 320. To assist with the deflection of debris 318 from the separation airflow 308, the collection region 322 is configured to face downwards. That is, the collection region 322 is angled wholly or partially downwards. Thus when encountering the downwards-facing collection region 222, at least a proportion of the debris 318 in the separation airflow 308, will simply bounce off the collection region 322 without being collected.

The airflow system 350 may direct the separation airflow 308 with a longitudinal or lateral component as well as a vertical component. For example, as shown the separation airflow 308 may have a component in the conveying direction C. This enables the separation airflow 308 to push debris across the separation region 304 to the exit conveyor 302B. In other examples the airflow may have a component opposite to the conveying direction, causing separation to begin earlier and increasing the compactness of the fruit separation system 300 along the conveying direction C.

In this example, the outlet unit 356 further comprises a plurality of back vents 3564. The back vents 3564 are configured to direct a pre-separation airflow 311 through the harvested material 310. The pre-separation airflow 311 interacts with the harvested material 310 before the harvested material 310 reaches the fall step and/or the main separation airflow 308. The pre-separation airflow 311 may enhance the separation effect of the main separation airflow 308, by providing an initial reordering or agitation of the harvested material 310. For example, the pre-separation airflow may cause higher-drag-coefficient debris 318 such as leaves to unstick from fruit 312, and/or rise to the top of the pile of harvested material 310 on the entry conveyor 302A. Alternatively or additionally, the pre-separation airflow 311 may help prevent harvested material 310 from falling through the gap between the entry conveyor 302A and the outlet unit 356. That is, the pre-separation airflow 311 may provide an initial deflection to the harvested material 310 to ensure it reaches the separation region 304.

In some examples, the fruit separation system 300 is configured such that the conveying direction C is perpendicular to the direction of travel of the fruit harvesting machine 100. The conveying direction C may point outwards from the centreline of the fruit harvesting machine 100. This advantageously increases the compactness of the fruit separation system 300, and allows the fruit collection receptacles 330 to be positioned on the exterior of the fruit juice harvesting machine 100, allowing them to be more easily accessed or removed. In other examples, the fruit separation system 300 may be configured such that the conveying direction C is parallel to the direction of travel.

The width of the impingement surface 320 may be equal or wider than the width of the conveyors 302. This ensures that debris 318 will be deflected away from the intake unit 354 across the width of the conveyors 302.

In the example shown, the conveyor 302 comprises an entry conveyor 302A and an exit conveyor 302B. In the example shown, the entry and exit conveyors 302A, 302B both comprise conveyor belts. However, in other examples, the conveyor 302 may comprise a bucket system, rail system, wheel system, a roller system, a slide/chute, or any suitable combination thereof. For example, the entry conveyor 302A may comprise a powered belt or wheel system to drive the harvested material in the conveying direction C, and the exit conveyor 302B comprises a slide or chute system.

In some examples, a property of the fruit separation system 300 may be adjustable by a user in order to optimise the separation and fruit juice recovery process for different scenarios. For example, the speed of the entry conveyor 302A and/or exit conveyor 302B or the power of the airflow system 350 may be adjustable, or the angle of the entry conveyor 302A may be adjustable to change the angle of the conveying direction C. Alternatively or additionally, the height, position or angle of the impingement surface 320 may be adjustable. This flexibility allows operators to adapt to different grape varieties, vineyard conditions, and levels of debris. For example, when harvesting grape varieties with larger, denser leaves 318, the height of the impingement surface 320 may be lowered or the airflow system 350 power may be increased to ensure that the leaves 318 can reach the collection region 322 and be diverted along the surface of the collection region 322. Another exemplary grape variety might have smaller, lighter grapes 312. To ensure that the grapes 312 follow the correct trajectory, the entry conveyor 302A may be configured to run at a higher speed, or angled such that the conveying direction C has a larger vertical component.

The airflow components of an exemplary airflow system 450 according to an embodiment of the present disclosure will now be described in relation to Figures 4A and 4B. It will be understood that the airflow system 450 could be used within the fruit separation system 300 shown in Figure 3 to generate the separation airflow 308.

The airflow system 450 comprises an outlet unit in the form of a duct 456 comprising a plurality of outlet vents 4560. The outlet vents 4560 are located in the top of the duct 456 and form outlets from the interior of the duct 456. The outlet vents 4560 direct the separation airflow (not shown), and thereby define a separation region 404. A plane indicating the approximate location of the separation region 404 generated by each outlet vent 4560 is shown in Figure 4A.

A conveyor 402A conveys harvested material in a conveying direction C towards the separation region. In this example, the conveyor 402A comprises a series of rollers, each roller being comprised of a plurality of wheels 4022 arranged along the axis of the roller.

The entry conveyor 402A (shown in Figure 4B but hidden for clarity in Figure 4A) is positioned to launch harvested material (not shown) in the conveying direction C such that the debris flow paths (not shown) pass through the separation region 404. An exit conveyor 402B is positioned to receive debris and convey it away from the separation region 404. The wheels 4022 of the exit conveyor 402B are spaced sufficiently widely to allow any fruit that inadvertently lands on the exit conveyor 402B to drop through the rollers to a fruit collection receptacle underneath (not shown).

The intake unit 454 generates a supply airflow 409, which is supplied to the duct 456 via a supply system 452. The intake unit 454 has an intake opening 454A for ingesting airflow. The intake opening 454A may be positioned to capture fresh air into the airflow system 450, that is, air which is free of debris and dust particles. This reduces wear on the airflow system 450, particularly the intake unit 454.

The supply system 452 is configured to supply the supply airflow 409 to the duct 456 such that the supply airflow 409 has a substantially equal pressure across the outlet vents 4560. This ensures that the separation airflow generated by the outlet vents 4560 is substantially stable and consistent across the width of the conveyors 402A, 402B, which in turn increases the consistency of fruit/debris separation.

In this example, the supply system 452 comprises a pair of supply ducts 452A, 452B for communicating the supply airflow 409 from the intake unit 454 to the duct 456. Each supply duct 452A, 452B is fluidly connected at one end to the intake unit 454, and fluidly connected at its other end to the outlet unit 456. The first supply duct 452A is fluidly connected at or proximal to a first end 4562A of the outlet unit 456, e.g. on one side of the conveyors 402A, 402B across their width W, as shown. The second supply duct 452B is fluidly connected at or proximal to a second end 4562B of the outlet unit 456, e.g. on the other side of the conveyors 402A, 402B across their width W. The outlet vents 4560 are disposed between the first 452A and 452B supply ducts, that is, they are positioned across the outlet unit 456 between the connection points 4562A, 4562B with the supply ducts 452A, 452B. Providing supply ducts 452A, 452B connected to different ends of the outlet unit 456 ensures that the pressure at both ends of the outlet unit 456 is the same (or at least more similar than it otherwise have been), creating a constant pressure across the outlet vents 4560 and thereby ensuring a consistent separation airflow. As shown, the first 452A and second 452B supply ducts may have substantially equal lengths, such that the aerodynamic and pressure losses along each supply duct 452A, 452B are substantially the same and the supply airflow 409 supplied by each supply duct 452A, 452B is similar. The length of each supply duct 452A, 452B may be measured as the length of the fluid path between the intake unit 454 and the outlet unit 456 along the supply duct 452A, 452B.

The intake unit 454 in this example comprises a fan for accelerating and compressing air to generate the supply airflow 409, thereby directing air into the airflow system 450 and towards the outlet unit 456. The fan creates a pressure gradient within the airflow, sucking air into the intake opening 454A and pushing air out of the outlet vents 4560. An impingement surface 420 (shown in Figure 4B but hidden for clarity in Figure 4A) redirects the debris flow path so as to prevent debris lifted by the separation airflow from reaching the intake unit 454, as described in detail with reference to Figure 3. The impingement surface 420 comprises side walls 4202 extending downwards towards the conveyors 402A, 402B, to help direct debris onto the exit conveyor 402B.

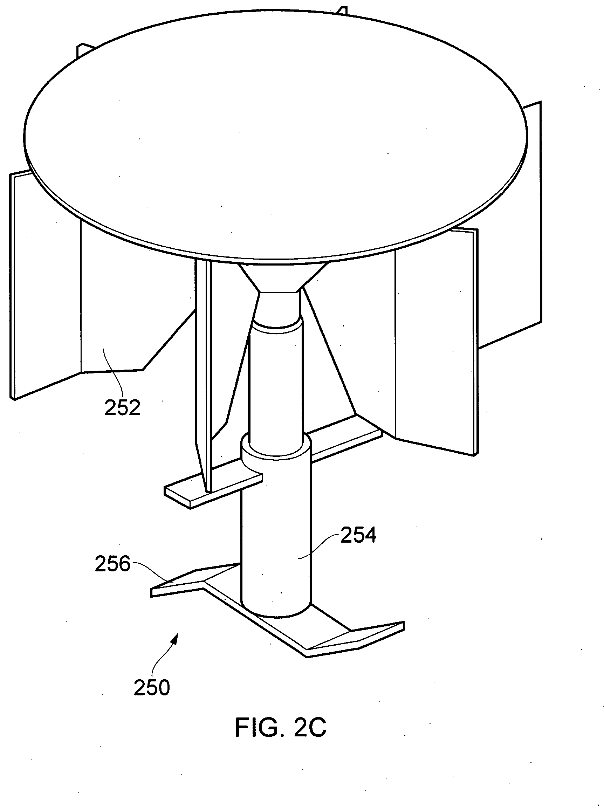

Since the fan is positioned away from the debris and fruit flow paths, the fan can be configured for aerodynamic efficiency and low noise, rather than robustness to collision and resistance to corrosion. Accordingly, in the example shown (in Figure 4C in particular) the fan comprises a centrifugal fan, specifically a centrifugal scroll fan (also known as a squirrel cage or hamster wheel fan, because shape of the impeller resembles that of a hamster wheel). The centrifugal fan comprises an axial-flow inlet and a radial-flow outlet, and an impeller 4540 configured to spin within the fan around the axis 4540A. The blades 4542 of the impeller 4540 cause intake air 4546 from the axial-flow inlet to be accelerated radially outwards away from the axis of rotation 4540A of the impeller 4540 into the radial-flow outlet ducting 4520 surrounding the impeller 4540. Compared to the fan 254 in Figure 2, the impeller 4540 has a higher number of individual blades 4542, and each blade 4542 is thinner and has a more complex curved profile. The shaping of the blades 4542 is configured to provide optimal aerodynamic efficiency while minimising noise. The rotation speed of the impeller 4540 may be adjustable to change the power output of the airflow system 450.

Existing fruit harvesting machines are known for creating loud and unpleasant noise. This noise can be so loud that it can limit the operation of the fruit harvesting machine, as such loud machinery is typically prohibited by local laws from operating within a certain range of residences during night hours or at weekends.

Noise reduction is particularly advantageous for mobile fruit harvesting machines, as vineyards and orchards can be located nearby or even within urban areas. By reducing the noise emitted by fruit harvesting machines, the use of a centrifugal fan may allow fruit harvesting machines to be operated earlier in the morning and later at night, allowing longer hours of operation during the busy harvesting season.

The airflow generated by and surrounding an exemplary airflow system 550 are shown in Figure 5. In the CFD renders, darker colours indicate lower pressures (and hence higher velocities), and lighter colours indicate higher pressures (and hence lower velocities). The profiles of solid structures are shown in white.

The airflow plot shows the velocity of the directional separation airflow 508 being directed from outlet vents 5560 of the airflow system 550 through a separation region 504 towards the impingement surface 520. The velocity of the separation airflow 508 is sufficient to lift debris in a coherent jet, but not so great as to become turbulent and unpredictable.

The impingement surface 520 comprises a collection region 522 and a delivery region 524. The axis 508A of the separation airflow 508 meets the collection region 522 at an impingement angle IA. The impingement angle IA is angled such that once the separation airflow 508 meets the collection region 522, at least a portion of the separation airflow 508 is directed to flow across the impingement surface 520 towards a downstream delivery region 524 at a downstream open end 522A of the impingement surface 520, from which debris is directed off the impingement surface 520. In the example shown, the impingement surface 520 is curved such that at least a portion of the collection region 522 has a tangent that is angled (i.e., not perpendicular) with respect to the separation airflow 508. In other examples, the separation airflow 508 may be directed using a flat, angled impingement surface 520, or an impingement surface 520 which comprises flat or planar regions that are angled in the same way with respect to the separation airflow 508.

Inevitably, separation airflow 508 is also directed to flow across the impingement surface 520 towards the upstream open end 522B of the collection region 522. However, the impingement surface 520 and its arrangement relative to the axis 508A of the separation airflow 508 can be designed such that the majority of the separation airflow 508 is directed towards the delivery region 524 at the downstream open end 522A of the collection region 522. The force of the separation airflow 508 thus assists in pushing collected high-drag-coefficient debris across the collection region 522 and off the impingement surface 520. To direct a substantial component of the separation airflow 508 along the impingement surface 520, the impingement angle IA is preferably less than 90 degrees.

In the example shown, the conveyor system 502 comprises an entry 502A and exit 502B conveyor either side of the separation region 504. The entry conveyor 502A comprises a conveyor belt (although the belt is too small to be seen in the airflow plot and only the driving wheel 5022A is visible), and the exit conveyor 502B comprises a plurality of driven rollers 5022B. The rollers 5022B are spaced apart such that solid debris such as leaves and twigs (not shown) are rolled from one roller 5022B to the next, and thereby passed out of the fruit separation system.

A supply airflow is supplied to an outlet unit 556 from a supply system (not shown). In fact, the supply system supplies two supply airflows 509A, 509B, with the supply airflows 509A, 509B being supplied to opposite ends of the outlet unit 556 across the width of the conveyor. A plurality of outlet vents 5560 are distributed over the outlet unit 556 across a width W of the conveyor perpendicular to the conveying direction C, ensuring that the separation airflow 508 is generated across the whole or at least a substantial fraction of the width of the conveyor. The supply airflows 509A, 509B are directed towards each other such that they meet underneath the outlet vents 5560. This creates a local pressure increase underneath the outlet vents 5560, which causes the supply airflow to flow out of the outlet vents 5560 as a separation airflow 508.

The separation airflow 508 is directed upwards by the outlet vents 5560 towards an impingement surface 520. The separation airflow 508 meets the impingement surface 520 at a collection region 522. Debris suspended in the separation airflow 508 are redirected by the impingement surface 520 to the delivery region 524, whereupon they are directed onto the exit conveyor. The impingement surface 520 comprises side walls 5202, which assist in directing the separation airflow across the impingement surface from the collection region 522 to the delivery region 524.

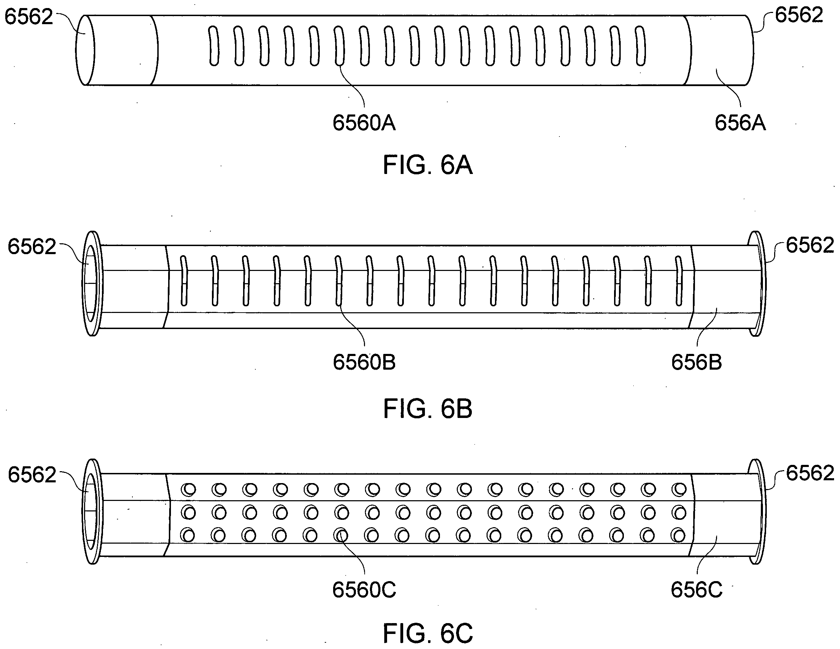

Figure 6 shows three alternative exemplary outlet units 656. The outlet unit 656A in Figure 6A, is the outlet unit 456 shown in Figure 4. The other outlet units 656B, 656C in Figures 6B and 6C may also be fitted into the airflow system 450 of Figure 4.

Each of the outlet units 656A-C is a duct comprising at least one open end 6562 (in the examples shown, there are two open ends). Supply ducts may be connected to the open end(s) 6562.

Outlet vents 6560A-C are provided in the side wall of each of the outlet units 656A-C. In each of the examples shown, the outlet vents 6560A-C are configured to provide a substantially constant and consistent separation airflow across a width of the conveyor. The size, shape and arrangement of the outlet vents 6560A-C may be configured to provide a specified air velocity at the exit of the outlet vents 6560A-C, and/or to aerodynamically couple with the airflow system such that the airflow system remains in its optimal operating condition.

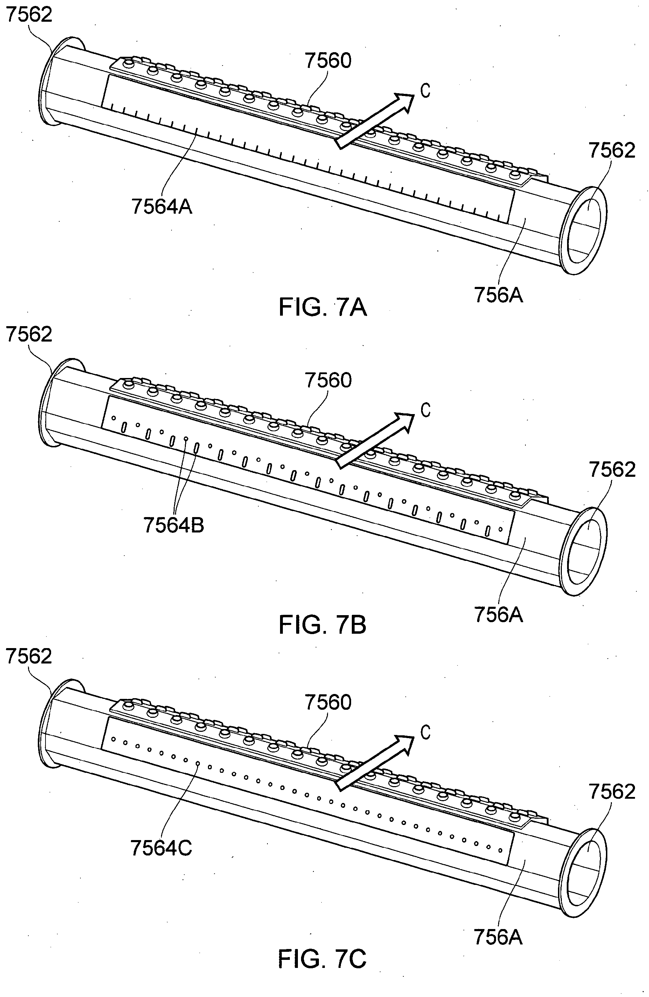

Figure 7 shows three more exemplary outlet units 756A-C, comprising a pair of open ends 7562 and outlet vents 7560A-C. The conveying direction C, i.e. the direction in which harvested material travels over the outlet vent 756 is indicated by an arrow.

Each of the outlet units 756A-C comprises back vents 7564A-C for generating a pre-separation airflow. As shown, the back vents 7564A-C may comprise a plurality of vents spread across the width of the conveyor (that is, the same width as the outlet vents 7560A-C).

The back vents 7564A-C may direct the pre-separation airflow upwards and in the opposite direction the conveying direction C, such that the pre-separation airflow meets the harvested material before the separation airflow generated by the main outlet vents 7560A-C. Since the pre-separation airflow is preferably weaker than the main separation airflow, the back vents 7564A-C preferably have smaller diameters and/or are fewer in number than the outlet vents 7560A-C.

In this specification, example embodiments have been presented in terms of a selected set of details. However, a person of ordinary skill in the art would understand that many other example embodiments may be practiced which include a different selected set of these details. It is intended that the following claims cover all possible example embodiments.

## Claims

1. A mobile fruit harvesting machine (100), comprising:
a conveyor (302, 402, 502) configured to receive harvested material and convey the harvested material (310) in a conveying direction (C) through a separation region (304, 404), the harvested material comprising a mixture of fruit (312) and debris (318, 319); and
an airflow system (350, 450) configured to direct a separation airflow (308, 508) through the harvested material (310) in the separation region, the separation airflow causing the fruit and debris to follow differing flow paths (312A, 318A, 319A) through the separation region,
wherein the airflow system comprises:
an outlet unit (356, 456, 556) comprising a plurality of outlet vents (3560, 4560, 5560) located underneath the separation region, the outlet vents being configured to direct the separation airflow upwards through the separation region; and
an intake unit (354, 454) for supplying a supply airflow (409, 509) to the outlet unit, the intake unit being spaced away from both the fruit and debris flow paths.

2. The mobile fruit harvesting machine (100) of the preceding claim, wherein the airflow system (350, 450) further comprises a supply system (452) for supplying the supply airflow (409, 509) to the outlet unit such that the supply airflow has a substantially equal pressure across the outlet vents.

3. The mobile fruit harvesting machine (100) of the preceding claim, wherein the supply system (452) comprises one or more supply ducts (452A, 452B) for communicating the supply airflow from the intake unit (354, 454) to the outlet unit (356, 456, 556).

4. The mobile fruit harvesting machine (100) of any preceding claim, wherein the intake unit (354, 454) is fluidly connected to the outlet unit via a first (452A) and second (452B) supply duct, the supply ducts being configured to supply the supply airflow (409) from the intake unit to the outlet unit (356, 456, 556), and preferably wherein the first and second ducts have equal lengths.

5. The mobile fruit harvesting machine (100) of the preceding claim, wherein the first supply duct (452A) is fluidly connected proximal to a first end (4562A) of the outlet unit (356, 456, 556), and the second supply duct (452B) is fluidly connected proximal to a second end (4562B) of the outlet unit.

6. The mobile fruit harvesting machine (100) of the preceding claim, wherein the plurality of outlet vents (3560, 4560, 5560) are disposed between the first (452A) and second (452B) supply ducts.

7. The mobile fruit harvesting machine (100) of the preceding claim, wherein the intake unit (354, 454) comprises an intake opening (354A, 454A) located above the debris flow path (318A, 318B).

8. The mobile fruit harvesting machine (100) of any preceding claim, comprising an impingement surface (320, 420, 520) configured to collect material suspended within the separation airflow (308, 508).

9. The mobile fruit harvesting machine (100) of the preceding claim, wherein the separation airflow (308, 508) meets a collection region (322, 522) of the impingement surface (320, 420, 520) at an impinging angle (IA), the impinging angle being less than 90°, preferably less than 80°, and more preferably less than 70°.

10. The mobile fruit harvesting machine (100) of claim 8 or 9, wherein the impingement surface (320, 420, 520) is located downstream from the outlet vents (3560, 4560, 5560) along the separation airflow (308, 508).

11. The mobile fruit harvesting machine (100) of any preceding claim, wherein the intake unit (354, 454) comprises a fan configured to direct air into the airflow system (350, 450, 550) and towards the outlet unit (356, 456, 556), and preferably the fan is a centrifugal fan, and further preferably the fan is a centrifugal scroll fan.

12. The mobile fruit harvesting machine (100) of any preceding claim, wherein the conveyor (302, 402, 502) is configured to launch a component of the harvested material (310) in a substantially ballistic trajectory passing through the separation region (304).

13. The mobile harvesting machine of any preceding claim, wherein the outlet vents (3560, 4560, 5560) are distributed across a width of the conveyor (302, 402, 502) perpendicular to the conveying direction (C).

14. The mobile harvesting machine of any preceding claim, wherein the conveyor (302, 402, 502) comprises an entry conveyor (302A), the entry conveyor being configured to direct harvested material (310) into a fall step across the separation (304) region, and preferably the conveyor further comprises an exit conveyor (302B) configured to direct a component of the harvested material (310) away from the separation region.

15. The mobile harvesting machine of any preceding claim, wherein the outlet unit (356, 756) further comprises a plurality of back vents (3564, 7564) for directing a pre-separation airflow through the harvested material (310).
